**Europäisches Patentamt**

**European Patent Office**

**Office européen des brevets**

(19)

(11) Veröffentlichungsnummer: **0 077 910**
**A1**

(12) # EUROPÄISCHE PATENTANMELDUNG

(21) Anmeldenummer: **82108487.8**

(22) Anmeldetag: **15.09.82**

(51) Int. Cl.3: **F 16 K 3/26**
**F 16 K 1/46, B 67 D 1/00**

(30) Priorität: **20.10.81 DE 8130642 U**

(43) Veröffentlichungstag der Anmeldung:
**04.05.83 Patentblatt 83/18**

(84) Benannte Vertragsstaaten:
**AT BE CH DE FR GB IT LI**

(71) Anmelder: **Bosch-Siemens Hausgeräte GmbH Stuttgart Patent- und Vertragswesen Hochstrasse 17 D-8000 München 80(DE)**

(72) Erfinder: **Deininger, Anton Vogtstrasse 20 D-8881 Bachhagel(DE)**

(54) **Dosierventil, insbesondere zur Abgabe viskoser Flüssigkeiten.**

(57) Dosierventil zur Abgabe viskoser Flüssigkeiten, wie Getränkekonzentrate oder dergleichen, mit einem rohrartigen Außengehäuse (2) und einem darin axial verschiebbaren Stößel (3), welcher mit einem Dichtungselement (4) gegen das mit einer Auslauföffnung (5) versehene, konisch verengte Ende des Außengehäuses anliegt und aufgrund der durch seine Schwerkraft hervorgerufenen Flächenpressung die Auslauföffnung des Dosierventils verschließt. Hierbei ist das Dichtungselement als ein am Stößelende sitzendes elastisches Formteil ausgebildet, welches im geschlossenen Zustand gegen den Rand der Auslauföffnung anliegt.

EP 0 077 910 A1

BOSCH-SIEMENS HAUSGERÄTE GMBH        8 München, den 13.09.1982
Stuttgart                            Hochstraße 17

TZP 81/101 E

## Dosierventil, insbesondere zur Abgabe viskoser Flüssigkeiten

Die Neuerung betrifft ein Dosierventil, insbesondere zur Abgabe viskoser Flüssigkeiten, wie Getränkekonzentrate oder dergleichen, mit einem wenigstens annähernd rohrartigen Aussengehäuse und einem darin axial verschiebbaren Stößel, welcher mit einem Dichtungselement gegen das mit einer Auslauföffnung versehene konisch verengte Ende des Außengehäuses anliegt und aufgrund der im wesentlichen durch seine Schwerkraft hervorgerufenen Flächenpressung die Auslauföffnung des Dosierventils verschließt.

Bei bekannten Dosierventilen der genannten Art ist der Stößel mit einer ring- oder scheibenartigen Dichtung ausgestattet, welche oberhalb der Auslauföffnung mit ihrer Außenkante in Form einer Dichtlippe gegen die innere Mantelfläche des an seinem Ende konisch verengten Außengehäuses anliegt. Hierdurch entsteht im unteren Randbereich des geschlossenen Dosierventils ein ringförmiger Spalt, aus dem auch nach dem Schließen des Ventils Flüssigkeit austritt, wodurch das Ventil nach dem Schließen nachtropft. Dies ist insbesondere bei hoch viskosen Flüssigkeiten der Fall, wie sie in Getränkeautomaten verwendet werden.

– 2 –

0077910

TZP 81/101 E

Hierdurch besteht die Gefahr, daß ein mit derartigen Ventilen ausgestatteter Getränkeautomat durch Nachtropfen der zu dosierenden Flüssigkeiten verschmutzt.

Der Neuerung liegt die Aufgabe zugrunde, ein Dosierventil so auszugestalten, daß ein Nachtropfen des Ventils nach dem Schließen mit Sicherheit vermieden wird.

Diese Aufgabe wird nach der vorliegenden Neuerung dadurch gelöst, daß das Dichtungselement als ein am Stößelende sitzendes elastisches Formteil ausgebildet ist, welches in geschlossenem Zustand gegen den Rand der Auslauföffnung anliegt.

Mit der Erfindungsgemäßen Ausbildung wird erreicht, daß bei geschlossenem Ventil der zwischen der Dichtung und dem Rand der Auslauföffnung gebildete Ringspalt auf ein Minimum reduziert wird.

Eine vorteilhafte Weiterbildung des Gegenstandes der Neuerung ergibt sich dadurch, daß das elastische Formteil an seiner dem Stößel zugekehrten Seite mit einem Ansatz versehen ist, welcher formschlüssig mit dem Ende des Stößels verbindbar ist.

Nach einer bevorzugten Ausführungsform der Neuerung ist vorgesehen, daß der Ansatz als Zapfen ausgebildet ist, welcher in eine zentrale Öffnung am Ende des Stößels einführbar und mit dem Stößel lösbar verbindbar ist.

Aufgrund dieser besonderen Ausbildung ist es jederzeit möglich, das das Dichtungselement bildende elastische Formteil auszutauschen, wenn sich im Laufe des Betriebes des Dosierventils Undichtigkeiten einstellen sollten.

TZP 81/101 E

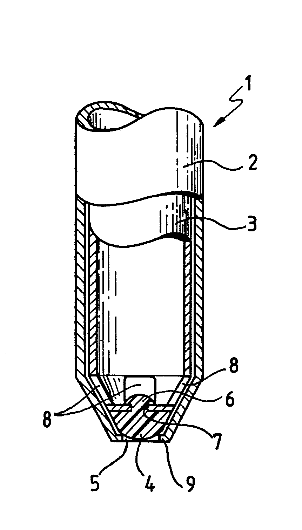

Weitere, in den Ansprüchen gekennzeichnete vorteilhafte
Merkmale sind in der nachfolgenden Beschreibung anhand
der Neuerung
eines in der beigefügten Zeichnung schematisch im Schnitt
dargestellten unteren Abschnitts eines Dosierventils für
einen Getränkeautomaten dargestellt.

Der untere Abschnitt eines in der einzigen Figur dargestellten Dosierventils 1 zur Abgabe viskoser Flüssigkeiten weist ein rohrartiges Außengehäuse 2 auf, in welchem
ein axial verschiebbarer, ebenfalls rohrartiger Stößel 3
angeordnet ist. Der axial verschiebbare Stößel 3 ist mit
einem Dichtungselement 4 ausgestattet, welches im geschlossenen Zustand des Dosierventils 1 gegen den Rand
einer Auslauföffnung 5 anliegt und sich am unteren Ende
des nach unten konisch verengten Außengehäuses 2 befindet.
Aufgrund der senkrechten Anordnung des Dosierventils findet die Abdichtung im wesentlichen durch die durch die
Schwerkraft des Stößels hervorgerufene Flächenpressung
des Dichtungselementes 4 am Rand der Auslaßöffnung 5
statt.

Das Dichtungselement 4 ist als ein am Stößelende 3 sitzendes elastisches Formteil ausgebildet, welches im geschlossenen Zustand gegen den Rand der Auslauföffnung 5 anliegt.
Auf seiner dem Stößel 3 zugekehrten Seite ist das das Dichtungselement 4 bildende elastische Formteil mit einem Ansatz 6 versehen, welcher formschlüssig mit dem Ende des
Stößels 3 verbunden ist. Zu diesem Zweck befindet sich in
einer stirnseitigen Fläche am Ende des Stößels 3 eine Öffnung 7, durch welche das Ende des Stößels hindurchsteckbar
und durch Einknöpfen lösbar befestigt ist. Am unteren Ende
des Stößels 3 befinden sich Auslauföffnungen 8, welche beim
Anheben des Stößels, beispielsweise durch das Magnetfeld eines nicht dargestellten Elektromagneten das Auslaufen der im Hohlraum des Stößels gespeicherten Flüssigkeit erlauben. Die Auslauföffnung 5 am unteren Ende des Außengehäuses 2 ist mit einer nach innen vorspringenden Ringschulter 9 versehen, gegen die der Stößel 3 mit dem als Dichtungselement dienenden elastischen Formteil im geschlossenen Zustand anliegt.

Aufgrund der besonderen Ausbildung des Dosierventils 1 hat der zwischen dem Rand der Auslauföffnung 5 und dem Dichtungselement 4 verbleibende ringartige Raum nur ein geringes Volumen. Auf diese Weise wird mit Sicherheit vermieden, daß nach dem Schließen des Dosierventils 1 Flüssigkeit aus diesem Ringraum nachtropfen kann.

## Schutzansprüche

1. Dosierventil, insbesondere zur Abgabe viskoser Flüssigkeiten, wie Getränkekonzentrate oder dergleichen, mit
   einem wenigstens annähernd rohrartigen Außengehäuse und
   einem darin axial verschiebbaren Stößel, welcher mit
   einem Dichtungselement gegen das mit einer Auslauföffnung versehene, konisch verengte Ende des Außengehäuses
   anliegt und aufgrund der im wesentlichen durch seine
   Schwerkraft hervorgerufenen Flächenpressung die Auslauföffnung des Dosierventils verschließt, d a d u r c h
   g e k e n n z e i c h n e t ,  daß das Dichtungselement (4) als ein am Stößelende (3) sitzendes elastisches
   Formteil ausgebildet ist, welches im geschlossenen Zustand gegen den Rand der Auslauföffnung (5) anliegt.

2. Dosierventil nach Anspruch 1, dadurch gekennzeichnet,
   daß das elastische Formteil (4) an seiner dem Stößel (3)
   zugekehrten Seite mit einem Ansatz (6) versehen ist, welcher formschlüssig mit dem Ende des Stößels (3) verbindbar ist.

3. Dosierventil nach Anspruch 2, dadurch gekennzeichnet,
   daß der Ansatz als Zapfen ausgebildet ist, welcher in
   eine zentrale Öffnung am Ende des Stößels einführbar
   und mit dem Stößel lösbar verbindbar ist.

4. Dosierventil nach Anspruch 1, dadurch gekennzeichnet,
   daß das elastische Formteil (4) mit dem Stößel (3) durch
   Kleben, Vulkanisieren oder dergleichen verbunden ist.

TZP 81/101 E

5. Dosierventil nach einem der vorhergehenden Ansprüche, dadurch gekennzeichnet, daß die Auslauföffnung 5 im Außengehäuse (2) mit einer nach innen vorspringenden Ringschulter (9) versehen ist, gegen die der Stößel (3) mit dem elastischen Formteil (4) im geschlossenen Zustand anliegt.

Europäisches
Patentamt

**EUROPÄISCHER RECHERCHENBERICHT**

0077910
Nummer der Anmeldung

EP 82 10 8487

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| A | US-A-2 645 380 (CANADA DRY GINGER ALE INC.) * Spalte 3, Zeilen 36-42, 50-55; Spalte 3, Zeile 74 - Spalte 4, Zeile 2 * | 1 | F 16 K 3/26<br>F 16 K 1/46<br>B 67 D 1/00 |
| A | DE-B-2 614 782 (DAGMA) * Figur 1 * | 1 | |
| A | FR-A-1 311 109 (SOC. DES ANCIENS ETABLISSEMENTS T.M.B.) | | |
| A | FR-A-1 183 324 (CIPAG-FRANCE) | | |
| A | FR-A- 785 809 (SANY FRERES) | | RECHERCHIERTE SACHGEBIETE (Int. Cl. ³) |
| A | US-A-2 689 669 (MEDALIE MFG. CO.) | | F 16 K 3/00<br>F 16 K 1/00<br>F 16 K 23/00<br>B 67 D 1/00<br>G 01 F 11/00<br>F 16 K 21/00 |

Der vorliegende Recherchenbericht wurde für alle Patentansprüche erstellt.

| Recherchenort<br>DEN HAAG | Abschlußdatum der Recherche<br>26-01-1983 | Prüfer<br>DE SMET F.P. |
|---|---|---|